(19) Europäisches Patentamt
European Patent Office
Office européen des brevets

(11) **EP 3 608 766 B1**

(12) **EUROPÄISCHE PATENTSCHRIFT**

(45) Veröffentlichungstag und Bekanntmachung des Hinweises auf die Patenterteilung:
**02.12.2020 Patentblatt 2020/49**

(21) Anmeldenummer: **19185449.6**

(22) Anmeldetag: **10.07.2019**

(51) Int Cl.:
*G06F 3/0484* (2013.01)　　*B62D 33/06* (2006.01)
*B60N 2/50* (2006.01)　　*G01H 1/00* (2006.01)
*G01H 3/14* (2006.01)　　*B60N 2/02* (2006.01)
*G01H 1/04* (2006.01)

(54) **SYSTEM ZUR DARSTELLUNG VON SCHWINGUNGEN**

SYSTEM FOR REPRESENTING VIBRATIONS

SYSTÈME DE REPRÉSENTATION DES VIBRATIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2018 DE 102018117322**

(43) Veröffentlichungstag der Anmeldung:
**12.02.2020 Patentblatt 2020/07**

(73) Patentinhaber: **GRAMMER AG**
**92289 Ursensollen (DE)**

(72) Erfinder: **Übelacker, Roland**
**92536 Pfreimd (DE)**

(74) Vertreter: **Hannke, Christian**
**Hannke Bittner & Partner**
**Patent- und Rechtsanwälte mbB**
**Prüfeninger Straße 1**
**93049 Regensburg (DE)**

(56) Entgegenhaltungen:
**EP-A1- 2 048 008　　EP-A2- 1 661 796**
**EP-A2- 1 752 747　　US-A- 5 732 370**

**Beschreibung**

Die Erfindung betrifft ein System zur Darstellung von Schwingungen für ein Fahrzeug, umfassend einen Fahrzeugsitz mit einem Oberteil und einem Unterteil, welche mittels einer Schwingungseinrichtung zueinander beweglich gelagert sind, wobei am Oberteil mindestens ein erster Sensor angeordnet ist, welcher dazu ausgebildet ist, mindestens eine erste Kenngröße einer ersten Beschleunigung des Oberteils gegenüber dem Unterteil zu erfassen, und wobei am Unterteil mindestens ein zweiter Sensor angeordnet ist, welcher dazu ausgebildet ist, mindestens eine zweite Kenngröße einer zweiten Beschleunigung des Unterteils gegenüber einem Untergrund des Fahrzeugs zu erfassen.

Aus dem Stand der Technik sind unterschiedliche Ansätze bekannt, Schwingungen, welche in ein Fahrzeug eingeleitet werden, zu verarbeiten. Hochpreisige Lösungen umfassen vollautomatische Schwingungsdämpfungssysteme, welche ohne Eingreifen des Fahrers Schwingungen erfassen sowie abbauen. Niedrigpreisige Lösungen verzichten auf ausgefeilte Schwingungsdämpfungssysteme. Die EP1661796 zeigt ein System zur Darstellung von Schwingungen für ein Fahrzeug, umfassend einen Fahrzeugsitz mit einem Oberteil und einem Unterteil, welche mittels einer Schwingungseinrichtung zueinander beweglich gelagert sind, wobei am Oberteil ein Sensor angeordnet ist, welcher dazu ausgebildet ist, eine erste Kenngröße einer ersten Beschleunigung des Oberteils gegenüber dem Unterteil zu erfassen, und wobei ein zweiter Sensor am Unterteil angeordnet ist, welcher dazu ausgebildet ist, eine zweite Kenngröße einer zweiten Beschleunigung des Unterteils gegenüber einem Untergrund des Fahrzeugs zu erfassen.

Aufgabe der vorliegenden Erfindung ist demnach, eine Zwischenlösung zu entwickeln, welche den Ansatz bietet, die eingeleiteten Schwingungen einerseits automatisch zu erfassen, andererseits jedoch durch individuelles Eingreifen des Fahrers abzubauen. Eine derartige semiautomatische Lösung wäre zum einen wirtschaftlich interessanter als die vollautomatischen Lösungen und böte dem Fahrer zum anderen die Möglichkeit, die Schwingungsregulierung gemäß seinen individuellen Wünschen anzupassen. Um dies zu gewährleisten, soll ein System entwickelt werden, welches in der Lage ist, dem Fahrer als Entscheidungsgrundlage zumindest eine qualitative Aussage über die eingeleiteten Schwingungen bereitzustellen.

Die Aufgabe der vorliegenden Erfindung wird gelöst von einem System zur Darstellung von Schwingungen für ein Fahrzeug, umfassend einen Fahrzeugsitz mit einem Oberteil und einem Unterteil, welche mittels einer Schwingungseinrichtung zueinander beweglich gelagert sind, wobei am Oberteil mindestens ein erster Sensor angeordnet ist, welcher dazu ausgebildet ist, mindestens eine erste Kenngröße einer ersten Beschleunigung des Oberteils gegenüber dem Unterteil zu erfassen, und wobei am Unterteil mindestens ein zweiter Sensor angeordnet ist, welcher dazu ausgebildet ist, mindestens eine zweite Kenngröße einer zweiten Beschleunigung des Unterteils gegenüber einem Untergrund des Fahrzeugs zu erfassen, wobei eine Anzeigeeinrichtung mit einem ersten Abschnitt und einem zweiten Abschnitt vorgesehen ist, welche jeweils eine vollständige Aufteilung in jeweils mindestens zwei, bevorzugt drei Segmente aufweisen, wobei die Größenverhältnisse der mindestens zwei Segmente zueinander in Abhängigkeit von einem aktuellen Wert der mindestens einen ersten Kenngröße oder der mindestens einen zweiten Kenngröße aktualisierbar sind.

Im Sinne der vorliegenden Erfindung wird der Ausdruck "Darstellung von Schwingungen" insbesondere derart verstanden, dass die reellen Werte der auftretenden Schwingungen quantitativ an die Wahrnehmung des Fahrers übertragbar sind. Somit ist eine schnelle Erfassung des Schwingungszustandes durch den Fahrer möglich.

Dem Fahrer wird also mittels der Anzeigeeinrichtung einerseits angezeigt, welche Schwingungen über den Untergrund in das Fahrzeug eingeleitet werden, und andererseits, welche Schwingungen das Oberteil des Fahrzeugsitzes vollführt. Damit erhält er eine Aussage darüber, welche Schwingungen überhaupt noch beim Sitz ankommen. Durch die Aufteilung der Abschnitte der Anzeigeeinrichtung in einzelne Segmente und durch die aktualisierbaren Größenverhältnisse der Segmente ist es dem Fahrer durch einen Blick auf die Anzeigeeinrichtung möglich, eine quantitative Aussage über den derzeitigen Schwingungszustand des Fahrzeugs und des Sitzes zu erhalten.

Schwingungen werden generell durch mehrere Kenngrößen charakterisiert. Die Periodendauer ist beispielsweise die Zeit, die verstreicht, während das schwingungsfähige System genau eine Schwingungsperiode durchläuft, wonach es sich wieder im selben Schwingungszustand befindet. Beispielsweise wird also die Beschleunigung über die Zeit aufgenommen, somit weist also das schwingungsfähige System nach einer Schwingungsperiode den gleichen Beschleunigungswert auf wie zu Beginn der Schwingungsperiode. Analog dazu wäre es möglich, die Auslenkung oder die Geschwindigkeit der Schwingung über die Zeit aufzunehmen. Die vorliegende Erfindung kann demnach auch auf eine Auslenkung oder eine Geschwindigkeit des Oberteils gegenüber dem Unterteil und/oder auf eine Auslenkung oder eine Geschwindigkeit des Unterteils gegenüber einem Untergrund gerichtet sein.

Dabei ist es bevorzugt, wenn die Anzeigeeinrichtung jeweils nach einem definierten Zeitintervall kontinuierlich aktualisierbar ist. Bevorzugt ist dieses Zeitintervall kleiner als 1 Sekunde, bevorzugter kleiner als 500 ms, meist bevorzugt kleiner als 200 ms.

Um die Signale der Sensoren verlustfrei weiterzugeben, ist es bevorzugt, dass der mindestens eine erste Sensor dazu ausgebildet ist, erste Signale, welche auf der mindestens einen ersten Kenngröße basieren, an eine übergeordnete Steuerungseinrichtung zu senden, und dass der mindestens eine zweite Sensor dazu ausgebildet ist, zweite Signale, welche auf der mindestens einen zweiten Kenngröße basieren, an die Steuerungseinrichtung zu senden, wobei die Steuerungseinrichtung dazu ausgebildet ist, ausgehend von den ersten und/oder den zweiten Signalen dritte und vierte Signale an die Anzeigeeinrichtung zu senden.

Im Sinne der vorliegenden Erfindung wird dabei unter dem Ausdruck "vollständige Aufteilung" verstanden, dass der erste und der zweite Abschnitt nur die hinsichtlich ihrer Größe aktualisierbaren Segmente, jedoch keine weiteren Elemente wie beispielsweise Hohlräume oder sonstige Zwischenelemente aufweisen. Mit anderen Worten füllen also die mindestens zwei Segmente des ersten Abschnitts und des zweiten Abschnitts den ihnen zugeordneten Abschnitt jeweils vollständig aus oder bilden zusammen jeweils 100% der Erstreckung des ersten oder des zweiten Abschnitts. Die einzelnen Segmente können dabei bevorzugt eine relative Größe von 0 bis 93,3% des gesamten ersten oder zweiten Abschnitts aufweisen.

Bevorzugt ist auch die Anzahl der Segmente aktualisierbar. Demnach ist es möglich, dass der erste und der zweite Abschnitt eine erste Anzahl von Segmenten darstellen (beispielsweise zwei) und nach einem Aktualisierungsschritt eine zweite Anzahl von Segmenten darstellen, welche sich von der ersten Anzahl von Segmenten unterscheidet (beispielsweise drei).

Bevorzugt sind die mindestens zwei Segmente untereinander zumindest vom menschlichen Auge visuell unterscheidbar. Dies kann beispielsweise gewährleistet sein, indem die mindestens zwei Segmente eine unterschiedliche Gestaltung in Form von unterschiedlichen Farben und/ oder Mustern (beispielsweise Schraffuren oder Punkte) aufweisen. Denkbar ist, dass jeweils eines der Segmente des ersten Abschnitts eine identische Gestaltung aufweist wie jeweils eines der Segmente des zweiten Abschnitts. Derartige Segmente werden im Folgenden als Zwillingssegmente bezeichnet. Bevorzugt gilt, dass mehrere oder alle Segmente des ersten Abschnitts ein Zwillingssegment im zweiten Abschnitt aufweisen.

Bevorzugt weisen der erste und/oder der zweite Abschnitt jeweils genau zwei oder jeweils genau drei Segmente auf. Beispielsweise ist denkbar, dass ein erstes Segment des ersten Abschnitts rot, ein zweites Segment des ersten Abschnitts gelb und ein drittes Segment des ersten Abschnitts grün gefärbt ist. Ferner ist denkbar, dass ein erstes Segment des zweiten Abschnitts grün, ein zweites Segment des zweiten Abschnitts gelb und ein drittes Segment des zweiten Abschnitts rot gefärbt ist.

Es hat sich in der Praxis bewährt, wenn der erste und der zweite Abschnitt unmittelbar aneinander angrenzend oder beabstandet ausgebildet sind. Dabei ist es bevorzugt, dass aneinander angrenzende Abschnitte des ersten und des zweiten Abschnitts eine identische Gestaltung aufweisen.

Es ist dabei bevorzugt, dass jedem bestimmten Größenverhältnis der Segmente des ersten und/oder des zweiten Abschnitts genau ein spezifischer aktueller Wert der mindestens einen ersten Kenngröße oder der mindestens einen zweiten Kenngröße zugrunde liegt. Gleiches gilt umgekehrt.

Dabei ist es vorteilhaft, wenn vorab jeweils ein Wertebereich für die mindestens eine erste Kenngröße und/oder die mindestens eine zweite Kenngröße definiert ist, welcher mittels der Anzeigeeinrichtung anzeigbar ist. Beispielsweise umfasst der vordefinierte Wertebereich Schwingungen, welche als unkritisch für den menschlichen Körper angesehen werden, und gleichzeitig Schwingungen, welche als besonders relevant für den menschlichen Körper angesehen werden, da sie beispielsweise Resonanzfrequenzen bestimmter Körperteile darstellen.

Ferner ist es vorteilhaft, dass jedes der Segmente jeweils einem bestimmten Bereich der Schwingungen zugeordnet ist. So steht beispielsweise ein erstes der Segmente für einen niedrigen Schwingungsbereich, ein zweites der Segmente für einen mittleren Schwingungsbereich und ein drittes der Segmente für einen hohen Schwingungsbereich. Je nach aktuellem Wert der Kenngröße ist es also bevorzugt, dass ein Segment des ersten und/oder des zweiten Abschnitts hinsichtlich seiner Größe die restlichen Segmente überwiegt.

So kann an der Anzeigeeinrichtung und genauer am aktuell angezeigten Größenverhältnis der Segmente zumindest abgeschätzt werden, ob der aktuelle Wert der mindestens einen ersten Kenngröße oder der mindestens einen zweiten Kenngröße einen hohen, mittleren oder niedrigen Wert aus dem Wertebereich darstellt.

Um es dem Fahrer möglichst einfach zu machen, anhand der Größenverhältnisse der Segmente des ersten und/oder des zweiten Abschnitts die Höhe des aktuellen Werts der ersten oder der zweiten Kenngröße abzuschätzen, wird eine Darstellung wie folgt vorgeschlagen.

Zugrunde liegt der Gedanke, eine virtuelle Kreisscheibe bereitzustellen, deren Außenumfangsfläche zu je einem ersten Anteil mit einer ersten Farbe oder einem ersten Muster ausgestaltet ist, zu je einem zweiten Anteil mit einer zweiten Farbe oder einem zweiten Muster ausgestaltet ist, bis hin zu einem n-ten Anteil, welcher mit einer n-ten Farbe oder einem n-ten Muster ausgestaltet ist. Die Anteile sind jeweils in Radialrichtung der Außenumfangsfläche durchgehend ausgebildet. Bevorzugt ist jeder Anteil benachbart zu zwei weiteren Anteilen angeordnet. Beispielsweise entsprechen die Anteile Dritteln, so dass n gleich 3 ist; in diesem Fall ist bevorzugt jeder Anteil benachbart zu jedem weiteren Anteil angeordnet.

Ein virtueller Beobachter steht seitlich neben der Kreisscheibe und richtet seinen Blick somit auf eine Hälfte der Außenumfangsfläche der Kreisscheibe; die andere Hälfte der Außenumfangsfläche der Kreisscheibe ist für ihn nicht sichtbar. Die Position des virtuellen Beobachters ist dabei so ausgestaltet, dass dessen Blickrichtung senkrecht zu einer Mittelachse der Kreisscheibe und diese schneidend angeordnet ist. Damit stellt sich für den virtuellen Beobachter die Farb- oder Musterverteilung der Außenumfangsfläche wie deren Projektion auf eine ebene Fläche parallel zur Mittelachse des Kreises dar. Je nach Winkelstellung der Kreisscheibe (in Bezug auf eine Drehung der Kreisscheibe um ihre eigene Mittelachse) ändert sich die Position der Anteile in Bezug auf die Position des Beobachters, so dass dieser ein geändertes Größenverhältnis der Segmente wahrnimmt.

Es wird im Folgenden vorgeschlagen, die Darstellung der Außenumfangsfläche gemäß der Projektion für die Darstellung der Segmente des ersten und des zweiten Abschnitts der Anzeigeeinrichtung zu verwenden.

Demnach ist es vorteilhaft, wenn eine Größe eines der Segmente des ersten und/oder zweiten Abschnitts der Anzeigeeinrichtung linear zu einer Größe einer Projektion eines dem jeweiligen Segment zugeordneten Anteils einer virtuellen Kreisscheibe auf eine Fläche parallel zu einer Mittelachse der virtuellen Kreisscheibe ausgestaltet ist. Bevorzugt ist die Kreisscheibe um ihre Mittelachse drehbar ausgestaltet, weiter bevorzugt zumindest oder ausschließlich in einem Bereich von 0 bis 180°.

Bevorzugt gilt, dass eine Anzahl der Anteile der Kreisscheibe einer Anzahl der Segmente des jeweiligen Abschnitts entspricht, wobei die Anteile bevorzugt jeweils gleich groß sind und/oder die Kreisscheibe bevorzugt vollständig in die Anteile aufgeteilt ist.

Denkbar ist hier jedoch auch, dass die Anteile nicht gleich groß sind. Beispielsweise ist ein Anteil größer ausgestaltet als die restlichen Anteile. Dies ist dann sinnvoll, wenn beispielsweise ein kritischer Bereich einer Schwingung ab einem bestimmten Wert schneller für den Fahrer erkennbar sein soll.

Die vorstehenden Erläuterungen gelten vorteilhaft für jede denkbare Form des ersten und/oder des zweiten Abschnitts (Balken, Kreis, Halbkreis), wie untenstehend noch näher beschrieben.

Nach einem Blick auf die Anzeigeeinrichtung kann der Fahrer beispielsweise manuell Aktoren ansteuern. Beispiele für solche Aktoren sind Ventile zur Be- oder Entlüftung von Reifen oder einer Luftfeder (wodurch beispielsweise eine Verstellung der Federkennlinie möglich ist) oder Vorrichtungen zum Ändern von Parametern von Dämpfern oder Federn. Bevorzugt sind den Aktoren Funktionen und/ oder Verstellmöglichkeiten zugeordnet, welche keine Auswirkungen auf den Fahrzeugsitz, sondern lediglich auf den Rest des Fahrzeugs haben. Denkbar ist jedoch auch, dass den Aktoren Funktionen und/ oder Verstellmöglichkeiten zugeordnet sind, welche Auswirkungen auf den Fahrzeugsitz, auf das Fahrzeug und/ oder auf am Fahrzeug angeordnete sonstige Komponenten betreffen.

Es ist dabei vorteilhaft, wenn die mindestens eine erste Kenngröße und die mindestens eine zweite Kenngröße ausgewählt sind aus einer Gruppe umfassend eine Amplitude, eine Frequenz, eine Periodendauer, ein Istwert, einen Summanden und einen Mittelwert über eine definierte Zeitspanne der ersten oder der zweiten Beschleunigung.

Dabei gilt für den Summanden und/oder den Mittelwert über eine definierte Zeitspanne beispielsweise, dass dieser ausgehend von einer aktuellen Zeit berechnet wird. Beispielsweise wird der Summand und/oder der Mittelwert unter Berücksichtigung der Werte eines Zeitintervalls unmittelbar vor der aktuellen Zeit berechnet. Beispielsweise ist die Dauer des Zeitintervalls 8h, 1h, 1 min, 1s, 100ms oder 10ms. Insofern stellt auch der Summand und der Mittelwert jeweils einen aktuellen Wert der Kenngrößen dar.

Dieser Summand stellt vorteilhaft eine Summe (oder ein Integral) der in dem jeweiligen Zeitintervall erfassten Werte der Amplitude, der Frequenz, der Periodendauer und/oder des Istwerts der ersten oder der zweiten Beschleunigung dar.

Der Mittelwert stellt vorteilhaft einen Mittelwert der in dem jeweiligen Zeitintervall erfassten Werte der Amplitude, der Frequenz, der Periodendauer und/ oder des Istwerts der ersten oder der zweiten Beschleunigung dar.

Vorteilhaft ist es dem Fahrer möglich, zwischen verschiedenen Kenngrößen umzuschalten, um beispielsweise einmal den aktuellen Wert der Schwingungsdauer oder den aktuellen Wert der Amplitude der Beschleunigung der Schwingung und ein anderes Mal den Mittelwert der entsprechenden Amplituden der letzten Stunde anzuzeigen. Am Ende des Arbeitstages (nach 8h) ist beispielsweise eine Summe der Istwerte der aufgetretenen Beschleunigungen interessant.

Somit ist es vorteilhaft, wenn die Anzeigeeinrichtung und insbesondere deren erster und/oder zweiter Abschnitt hinsichtlich einer Darstellung zwischen verschiedenen Arten von Kenngrößen umschaltbar ist/sind.

Außerdem ist es denkbar, dass der erste Abschnitt und/oder der zweite Abschnitt der Anzeigeeinrichtung jeweils in Form eines Balkens ausgestaltet sind, welcher entlang einer Längserstreckung eine Unterteilung in die mindestens zwei Segmente aufweist.

Alternativ ist es denkbar, dass der erste Abschnitt und/oder der zweite Abschnitt in Form eines Kreises oder eines Halbkreises ausgestaltet sind, welcher entlang einer Radialrichtung eine Unterteilung in die mindestens drei Segmente aufweist. Dieser Kreis oder Halbkreis ist also Teil der tatsächlich sichtbaren Anzeigeeinrichtung, während die oben erwähnte virtuelle Kreisscheibe nur einer Erläuterung dient, auf welcher Grundüberlegung basierend die aktuellen Größenverhältnisse der Segmente berechnet werden können.

Um dem Fahrer die Möglichkeit zu geben, die Aktoren anhand der Daten oder Erkenntnisse aus früheren Fahrten möglichst effizient einstellen zu können, ist es bevorzugt, dass Parameter von Aktoren des Fahrzeugs mittels der Steuerungseinrichtung einstellbar sind, wobei mittels der Steuerungseinrichtung die Parameter der Aktoren und/oder Daten, welche auf den ersten, zweiten, dritten und/oder vierten Signalen basieren, an eine Verarbeitungseinheit und an eine Speichereinheit übertragbar sind.

Weitere Vorteile, Ziele und Eigenschaften vorliegender Erfindung werden anhand anliegender Zeichnung und nachfolgender Beschreibung erläutert, in welchen beispielhaft ein Fahrzeugsitz mit einer erfindungsgemäßen Verstelleinrichtung dargestellt und beschrieben ist. In der Zeichnung zeigen:

Fig. 1        eine schematische Darstellung eines erfindungsgemäßen Systems;

Fig. 2        eine schematische Darstellung eines Schaltbilds des erfindungsgemäßen Systems aus Fig. 1;

Fig. 3a-d     Darstellungen verschiedener Winkelstellungen einer virtuellen Kreisscheibe;

Fig. 4a-c     verschiedene Ausführungsformen der Anzeigeeinrichtung;

Fig. 5a, b    Darstellung verschiedener Schwingungsarten und deren Kenngrößen.

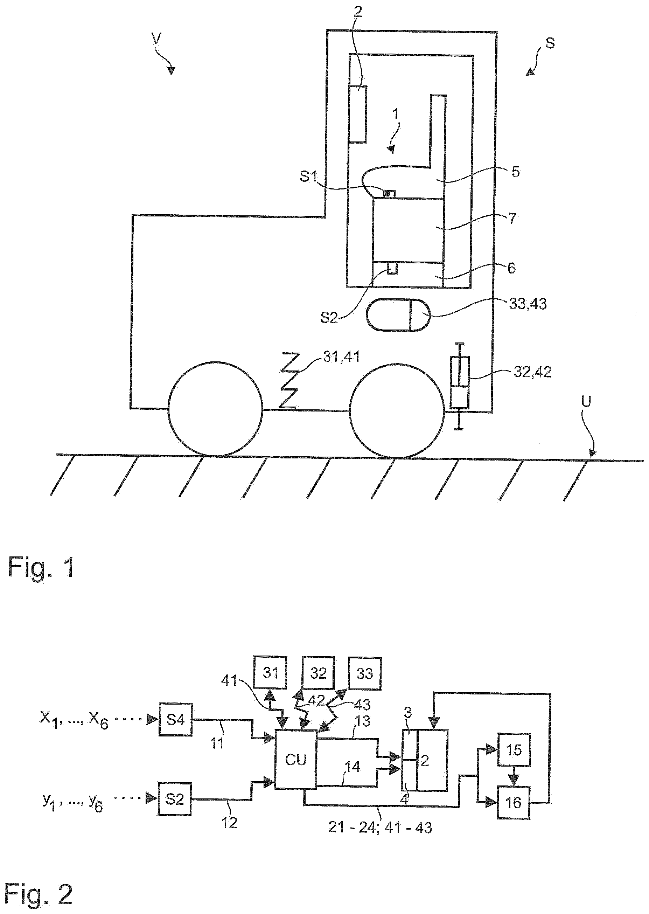

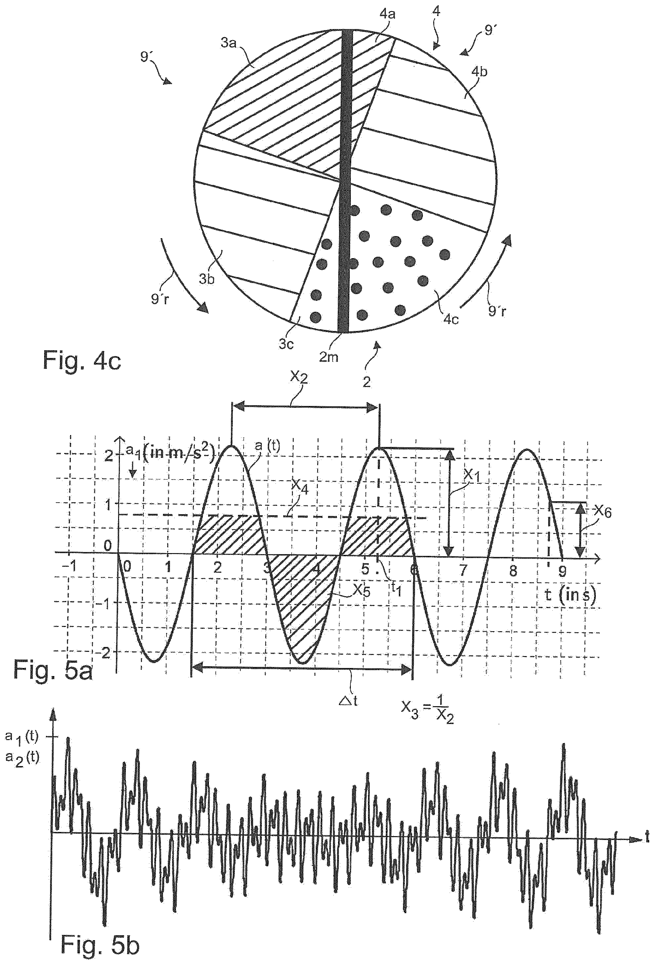

Gemäß der Fig. 1 ist eine Ausführungsform eines erfindungsgemäßen Systems S zur Darstellung von Schwingungen für ein Fahrzeug V gezeigt. Dieses System S umfasst einen Fahrzeugsitz 1 mit einem Oberteil 5 und einem Unterteil 6, welche mittels einer Schwingungseinrichtung 7 zueinander beweglich gelagert sind, wobei am Oberteil 5 vorliegend ein erster Sensor S1 angeordnet ist, welcher dazu ausgebildet ist, mindestens eine erste Kenngröße x1, ..., x6 (siehe Fig. 5a, 5b) einer ersten Beschleunigung des Oberteils 5 gegenüber dem Unterteil 6 zu erfassen. Vorliegend ist am Unterteil 6 ein zweiter Sensor S2 angeordnet, welcher dazu ausgebildet ist, mindestens eine zweite Kenngröße y1, ..., y6 (siehe Fig. 5b) einer zweiten Beschleunigung des Unterteils 6 gegenüber einem Untergrund U des Fahrzeugs V zu erfassen.

Details der Schwingungseinrichtung 7 sowie etwaige weitere Schwingungs-, Federungs- oder Dämpfungseinrichtungen des Fahrzeugsitzes 1 und des restlichen Fahrzeugs V sind nicht dargestellt.

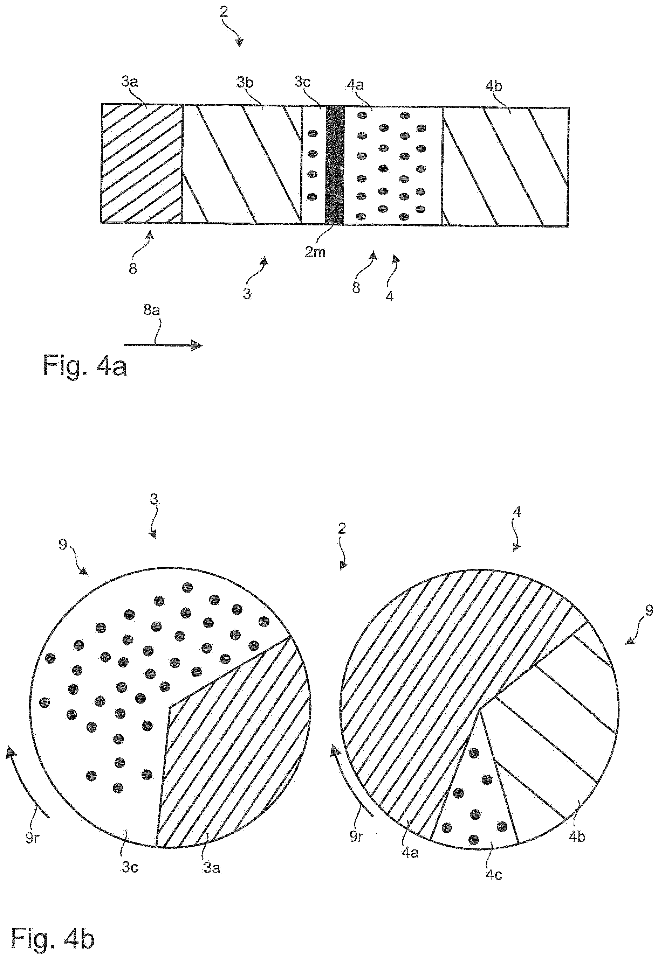

Ebenfalls dargestellt ist gemäß Fig. 1 eine Anzeigeeinrichtung 2. Details und Ausführungsbeispiele dieser Anzeigeeinrichtung 2 werden gemäß den Figuren 4a-c noch näher beschrieben. Anhand dieser Anzeigeeinrichtung 2 erhält ein nicht dargestellter Fahrer eine Aussage über einen aktuellen Wert einer ersten Beschleunigung a1 (siehe Fig. 5b) einer Schwingung des Oberteils 5 gegenüber dem Unterteil 6 und auch über einen aktuellen Wert einer zweiten Beschleunigung a2 (siehe Fig. 5b) einer Schwingung des Unterteils 5 gegenüber dem Untergrund U des Fahrzeugs V.

Gemäß der Fig. 2 ist eine schematische Darstellung eines Schaltbilds des erfindungsgemäßen Systems S aus Fig. 1 gezeigt. Demnach ist der mindestens eine erste Sensor S1 dazu ausgebildet, erste Signale 11, welche auf der mindestens einen ersten Kenngröße x1, ..., x6 basieren, an eine übergeordnete Steuerungseinrichtung CU zu senden. Außerdem ist der mindestens eine zweite Sensor S2 dazu ausgebildet, zweite Signale 12, welche auf der mindestens einen zweiten Kenngröße y1, ..., y6 basieren, an die Steuerungseinrichtung CU zu senden.

Die Steuerungseinrichtung CU wiederum ist dazu ausgebildet, ausgehend von den ersten 11 und/oder den zweiten Signalen 12 dritte 13 und vierte Signale 14 an die Anzeigeeinrichtung 2 zu senden. Beispielsweise stellen die ersten Signale 11 die Grundlage für die dritten Signale 13 sowie die zweiten Signale 12 die Grundlage für die vierten Signale 14 dar. Beispielsweise werden die dritten Signale 13 dazu verwendet, die Darstellung eines ersten Abschnitts 3 der Anzeigeeinrichtung 2 zu aktualisieren. Beispielsweise werden die vierten Signale 14 dazu verwendet, die Darstellung eines zweiten Abschnitts 4 der Anzeigeeinrichtung 2 zu aktualisieren.

Das vorliegende System S sieht vor, dass Parameter 41, 42, 43 von Aktoren 31, 32, 33 des Fahrzeugs V mittels der Steuerungseinrichtung CU einstellbar sind, wobei mittels der Steuerungseinrichtung CU die Parameter 41, 42, 43 der Aktoren 31, 32, 33 und/oder Daten 21, 22, 23, 24, welche auf den ersten, zweiten, dritten und/oder vierten Signalen 11, 12, 13, 14 basieren, an eine Verarbeitungseinheit 15 und an eine Speichereinheit 16 übertragbar sind.

Somit kann der Fahrer ausgehend von den Informationen, die er mit einem Blick auf die Anzeigeeinrichtung 2 erhält, die Parameter 41, 42, 43 der zur Verfügung stehenden Aktoren 31, 32, 33 anpassen. Gleichzeitig ist das System S in der Lage, Daten zusammenzuführen, zu verarbeiten und zu speichern. Dies ermöglicht es dem Fahrer, nachträglich abzurufen, auf Basis welcher ersten 11 und/oder zweiten Signalen 12 welche Parameter 41, 42, 43 welcher Aktoren 31, 32, 33 wie verändert wurden (durch Aussendung der dritten 13 und vierten Signale 14). Ferner erkennt der Fahrer durch einen Blick auf die gespeicherten Werte, ob diese Veränderungen sinnvoll war oder nicht und beispielsweise zur erwünschten Reduktion der ersten Beschleunigung, beispielsweise hinsichtlich der Amplitude (x1, siehe Fig. 5a) des Oberteils 5 gegenüber dem Unterteil 6 geführt haben.

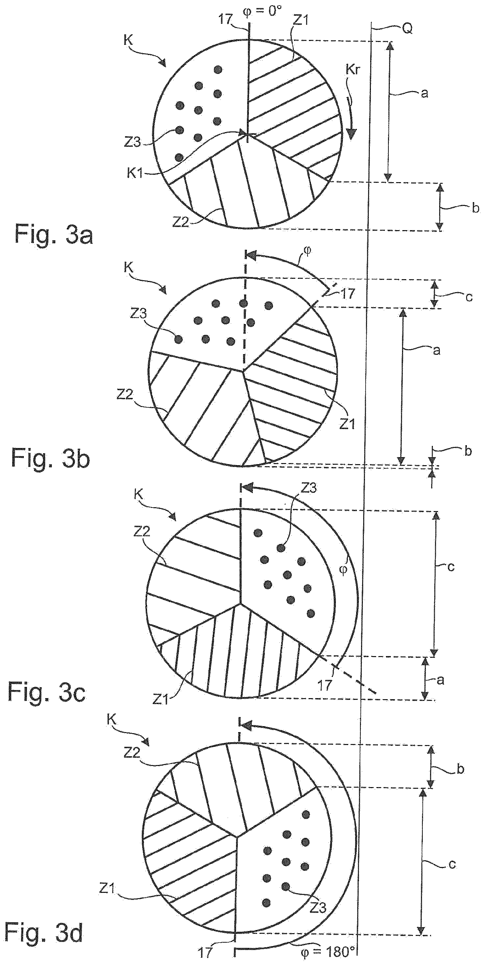

Anhand der Fig. 3a-d ist nun ein Beispiel einer mathematischen Grundlage gezeigt, wie die auf der Anzeigeeinrichtung 2 tatsächlich dargestellten Größenverhältnisse der Segmente 3a, 3b, 3c; 4a, 4b, 4c des ersten 3 und/oder zweiten Abschnitts 4 der Anzeigeeinrichtung 2 mit dem zugrundeliegenden aktuellen Wert der mindestens einen ersten Kenngröße x1, ..., x6 oder der mindestens einen zweiten Kenngröße y1, ..., y6 in Abhängigkeit stehen können. Es sei erwähnt, dass die virtuelle Kreisscheibe K nicht gegenständlich ausgebildet ist; vielmehr soll die nachfolgende Erklärung anhand der virtuellen Kreisscheibe K und deren virtuelle Drehung um ihre Mittelachse K1 um den Winkel φ anschaulicher erläutert werden.

Gezeigt ist hier eine virtuelle Kreisscheibe K, welche entlang einer Radialrichtung Kr vollständig, also ohne Rest, in vorliegend drei gleich große Anteile Z1, Z2, Z3 zu je 120° aufgeteilt ist.

Dabei entspricht die Anzahl (vorliegend drei) der Anteile Z1, Z2, Z3 der Kreisscheibe K einer maximalen Anzahl der Segmente 3a, 3b, 3c; 4a, 4b, 4c des jeweiligen Abschnitts 3; 4. Derartige Abschnitte 3; 4 mit jeweils drei Segmenten 3a, 3b, 3c; 4a, 4b, 4c sind beispielsweise anhand der Ausführungsbeispiele der Figuren 4a-c veranschaulicht.

Ebenfalls gezeigt ist eine Fläche Q, welche parallel zu einer Mittelachse K1 der virtuellen Kreisscheibe K ausgestaltet ist.

In diesem Beispiel ist eine Größe eines der Segmente 3a, 3b, 3c; 4a, 4b, 4c des ersten 3 und/oder zweiten Abschnitts 4 der Anzeigeeinrichtung 2 linear zu einer Größe einer Projektion a, b, c eines dem jeweiligen Segment 3a, 3b, 3c; 4a, 4b, 4c zugeordneten Anteils Z1, Z2, Z3 der virtuellen Kreisscheibe K auf die Fläche Q. Vorliegend entspricht die Projektion also einer Linie mit einer bestimmten Länge a, b oder c.

Denkbar ist beispielsweise, dass der erste Anteil Z1 dem ersten Segment 3a, der zweite Anteil Z2 dem zweiten Segment 3b und der dritte Anteil Z3 dem dritten Segment 3c des ersten Abschnitts 3 zugeordnet ist. Selbstverständlich kann die Darstellung des zweiten Abschnitts 4 gemäß einer analogen Systematik erfolgen.

Eine Position einer Trennlinie 17 zwischen dem ersten Z1 und dem dritten Anteil Z3 dient dabei als Anhaltspunkt für einen Wert eines Winkels φ, um den der Kreis K gegenüber einer Nullposition (siehe Fig. 3a) um seine Mittelachse K1 verdreht ist. Diese Trennlinie 17 steht gemäß der Fig. 3a an der 12-Uhr-Position; damit weist der Winkel φ einen Wert von 0 auf. Gemäß der Fig. 3d steht die Trennlinie 17 an der 6-Uhr-Position; damit weist der Winkel φ einen Wert von 180° auf. Die Darstellungen der Figuren 3b und 3c zeigen jeweils Positionen für Werte von φ zwischen 0 und 180°. Bevorzugt stellen die Positionen gemäß den Figuren 3a und 3d Endpositionen der veranschaulichten Drehbewegung der Kreisscheibe K dar, so dass die vorliegende Kreisscheibe K ausschließlich in einem Bereich von 0 bis 180° drehbar ist.

Dieser Winkel φ steht beispielsweise vorliegend in einem linearen Zusammenhang mit einer x1 der mindestens einen ersten Kenngrößen x1, ..., x6 einer ersten Beschleunigung des Oberteils 5 gegenüber dem Unterteil 6; es gilt also beispielsweise für φ:

$$\varphi = mx1 + t'$$

wobei m und t' die bekannten Parameter sind, mit deren Hilfe eine Gerade beschrieben werden kann.

Damit gilt: Ändert sich x1, so ändert sich auch der Winkel φ und damit die Position der Trennlinie 17 zwischen dem ersten Z1 und dem dritten Anteil Z3. Ebenfalls ändern sich, wie gemäß den Figuren 3a bis 3d dargestellt, die Größe der Projektionen a, b, c der Anteile Z1, Z2, Z3 der virtuellen Kreisscheibe K auf die Fläche Q. Während gemäß der Figur 3b alle drei Anteile Z1, Z2, Z3 mittels der Projektionen a, b, c auf die Fläche Q abgebildet sind, steht gemäß den Figuren 3a, 3c und 3d jeweils ein Anteil (Z3 bei Fig. 3a, Z2 bei Fig. 3c und Z1 bei Fig. 3d) so, dass er nicht auf die Fläche Q abgebildet ist.

Übertragen auf die Anzeigeeinrichtung 2 bedeutet dies: Liegt ein aktueller Wert der Kenngröße x1 gemäß Fig. 3b vor, werden drei Segmente 3a, 3b, 3c auf dem ersten Abschnitt 3 im Größenverhältnis von a : b : c gemäß Fig. 3b dargestellt. Liegt ein aktueller Wert der Kenngröße x1 gemäß Fig. 3a vor, werden nur zwei Segmente 3a, 3b auf dem ersten Abschnitt 3 im Größenverhältnis von a : b gemäß Fig. 3a dargestellt. Liegt ein aktueller Wert der Kenngröße x1 gemäß Fig. 3c vor, werden nur zwei Segmente 3a, 3c auf dem ersten Abschnitt 3 im Größenverhältnis von a : c gemäß Fig. 3c dargestellt. Liegt ein aktueller Wert der Kenngröße x1 gemäß Fig. 3d vor, werden nur zwei Segmente 3b, 3c auf dem ersten Abschnitt 3 im Größenverhältnis von b : c gemäß Fig. 3d dargestellt.

Gemäß der zugrundeliegenden Systematik werden also die Größenverhältnisse der drei Segmente 3a, 3b und 3c des ersten Abschnitts 3 der Anzeigeeinrichtung 2 den Größenverhältnissen der Projektionen a, b und c der Anteile Z1, Z2, Z3 der virtuellen Kreisscheibe K auf die Fläche Q angepasst. Schwingt der Fahrzeugsitz 1 also stark, so ist ein aktueller Wert der Kenngröße x1, welche beispielsweise die Amplitude x1 der Beschleunigung a1 der ersten Schwingung darstellt, hoch. Bezüglich des Beispiels der Kreisscheibe K entspricht das einer virtuellen Drehung der Kreisscheibe K um die Achse K1 um einen in Bezug auf den zugrundeliegenden Wertebereich von 0 ≤ φ ≤180° großen Winkel φ; beispielsweise ist in diesem Fall φ = 170°. Dies hat zur Folge, dass die Größe der Projektion c, welche dem dritten Anteil S3 zugeordnet ist, höher ist als die Größen der Projektionen a und b, welche dem ersten S1 und dem zweiten Anteil S2 zugeordnet sind.

Da der dritte Anteil Z3 dem dritten Segment 3c des ersten Abschnitts 3 der Anzeigeeinrichtung zugeordnet ist und vorliegend damit in einem linearen Zusammenhang steht, wobei gleiches analog für den ersten Z1 und zweiten Anteil Z2 und das erste 3a und zweite Segment 3b gilt, ändert sich also ebenfalls das Größenverhältnis der drei Segmente 3a, 3b und 3c zueinander auf dem ersten Abschnitt 3 der Anzeigeeinrichtung 2 linear zu den aktuell herrschenden Größenverhältnissen der Projektionen a, b und c. Der Fahrer würde also beispielsweise sehen, dass auf dem ersten Abschnitt 3 der Anzeigeeinrichtung 2 das dritte Segment 3c bezüglich seiner Größe eindeutig gegenüber den anderen Segmenten 3a und 3b überwiegt.

Durch eine entsprechende Farb- oder Mustergebung der Segmente 3a, 3b, 3c (beispielsweise grün für das erste Segment 3a, gelb für das zweite Segment 3b und rot für das dritte Segment 3c) kann die Erkennung nochmals beschleunigt werden: Der Fahrer sieht beispielsweise, dass die erste Anzeigeeinrichtung 3 aktuell vom (beispielsweise rot gefärbten) dritten Segment 3c dominiert wird, und kann somit unmittelbar auf einen hohen aktuellen Wert der Kenngröße x1 rückschließen und entsprechende Gegenmaßnahmen durch Anpassung der Parameter 41, 42, 43 der Aktoren 31, 32, 33 ergreifen.

Am Beispiel einer harmonischen Schwingung, welche also durch eine Sinusfunktion beschrieben werden kann, soll gemäß der Fig. 5a nochmals verdeutlicht werden, welche Kenngrößen einer Schwingung vorliegend relevant sein können. In diesem Beispiel sind die Kenngrößen x1, ..., x6 der ersten Beschleunigung a1 gezeigt.

Gezeigt ist ein Graph a(t), welcher die Beschleunigung a1 gegenüber der Zeit t darstellt. Die Auslenkung a(t) gibt den momentanen Wert (siehe markiertes Beispiel x6), die Amplitude x1 den maximal möglichen Wert der Größe a(t) an. Anhand des Graphen ist beispielsweise die Amplitude x1 der Beschleunigung a ablesbar (in diesem Beispiel ist x1 zum Zeitpunkt t1 markiert). Ebenfalls markiert ist die Periodendauer x2 zwischen Extremwerten des Graphen a(t). Daraus ergibt sich die Frequenz x3 der Schwingung als Kehrwert von x2.

Die Größe x2 ist die Zeit, die verstreicht, während das schwingungsfähige System (vorliegend aus Oberteil und Unterteil) genau eine Schwingungsperiode durchläuft, wonach es sich wieder im selben Schwingungszustand befindet. Beispielsweise weist also das schwingungsfähige System nach einer Schwingungsperiode den gleichen Beschleunigungswert auf wie zu Beginn der Schwingungsperiode.

Markiert ist ebenfalls ein Zeitintervall Δt und zwei damit verbundene Größen x4 und x5. Dabei stellt x4 den Mittelwert der Beschleunigung a(t) innerhalb des Zeitintervalls Δt dar. Die Größe x5 wiederum markiert den Flächeninhalt (positiv und negativ) unterhalb der Funktion a(t) vom Start des Zeitintervalls Δt bis zu dessen Ende.

Der Fachmann weiß natürlich, dass in der Realität die beschriebenen Schwingungen a1 und a2 generell nicht harmonisch sind, sondern eine Überlagerung von Teilschwingungen darstellen und somit als unharmonische Schwingungen (siehe Fig. 5b als Beispiel für a1(t) oder a2(t)) bezeichnet werden müssen. Die Frequenzen der Teilschwingungen der unharmonischen Schwingungen lassen sich nicht in ganzzahligen Proportionen ausdrücken.

Die Figuren 4a bis 4c zeigen drei Beispiele der Anzeigeeinrichtung 2 mit einem ersten Abschnitt 3 und einem zweiten Abschnitt 4, wobei die Abschnitte 3, 4 jeweils eine vollständige Aufteilung in jeweils zwei oder drei Segmente 3a, 3b, 3c; 4a, 4b, 4c aufweisen. Wie oben dargelegt sind die Anzahl und die Größenverhältnisse der drei Segmente 3a, 3b, 3c; 4a, 4b, 4c zueinander in Abhängigkeit von einem aktuellen Wert der mindestens einen ersten Kenngröße x1, ..., x6 oder der mindestens einen zweiten Kenngröße y1, ..., y6 aktualisierbar. Gezeigt sind daher willkürliche Ausgestaltungen der Größenverhältnisse.

Gemäß den Figuren 4a-c ist gezeigt, dass ein erstes Segment 3a des ersten Abschnitts 3 ein erstes Muster (aufweisend eine erste Schraffur mit einem ersten Abstand und einer ersten Richtung), ein zweites Segment 3a des ersten Abschnitts 3 ein zweites Muster (aufweisend eine zweite Schraffur mit einem zweiten Abstand und einer zweiten Richtung), und ein drittes Segment 3c des ersten Abschnitts 3 ein drittes Muster (aufweisend eine Punktverteilung) aufweist. In der Reihenfolge gilt diese Musterverteilung vorliegend ebenfalls für ein erstes Segment 4a des zweiten Abschnitts 4, ein zweites Segment 4b des zweiten Abschnitts 4 und ein drittes Segment 4c des zweiten Abschnitts 4 (Zwillingssegmente). Die ersten, zweiten und dritten Muster sind dabei visuell eindeutig voneinander unterscheidbar.

Analog dazu könnte die visuelle Unterscheidbarkeit auch durch eine unterschiedliche Farbgebung der einzelnen Segmente 3a, 3b, 3c und 4a, 4b, 4c erzielt werden.

Gemäß der Fig. 4a sind der erste Abschnitt 3 und der zweite Abschnitt 4 jeweils in Form eines Balkens 8 ausgestaltet, welcher entlang einer Längserstreckung 8a eine Unterteilung in vorliegend drei Segmente 3a, 3b, 3c und zwei Segmente 4a, 4b aufweist. Das dritte Segment 4c des zweiten Abschnitts 4 ist derzeit nicht zu sehen, da seine aktuelle Größe null ist (wie im Zusammenhang mit der Darstellung gemäß Fig. 3a erläutert). Die beiden Abschnitte 3 und 4 sind dabei entweder unmittelbar benachbart zueinander angeordnet oder wie vorliegend zur Veranschaulichung durch einen optionalen Mittelbalken 2m der Anzeigeeinrichtung 2 getrennt, wobei ein drittes Segment 3c des ersten Abschnitts 3 und ein erstes Segment 4a des zweiten Abschnitts 4 vorliegend jeweils unmittelbar benachbart zum Mittelbalken 2m angeordnet sind.

Die Fig. 4b zeigt ein Beispiel, wonach der erste Abschnitt 3 und der zweite Abschnitt 4 jeweils in Form eines Kreises 9 ausgestaltet sind. Diese Kreise 9 weisen entlang einer Radialrichtung 9r eine Unterteilung in vorliegend zwei Segmente 3a, 3c und drei Segmente 4a, 4b, 4c auf. Das zweite Segment 3b des ersten Abschnitts 3 ist derzeit nicht zu sehen, da seine aktuelle Größe null ist (wie im Zusammenhang mit der Darstellung gemäß Fig. 3c erläutert). Beide Kreise 9 sind nebeneinander, aber beabstandet zueinander angeordnet, so dass die zugrundeliegenden Kreisflächen nicht überlappend angeordnet sind.

Die Fig. 4c zeigt ein Beispiel, wonach der erste Abschnitt 3 und der zweite Abschnitt 4 jeweils in Form eines Halbkreises 9' ausgestaltet sind. Diese Halbkreise 9' weisen jeweils entlang einer Radialrichtung 9'r eine Unterteilung in drei Segmente 3a, 3b, 3c und drei Segmente 4a, 4b, 4c auf. Beide Halbkreise 9' können unmittelbar nebeneinander und nicht überlappend angeordnet und so ausgestaltet sein, dass sie zusammen die Form eines Vollkreises ausbilden. Vorliegend ist zur Veranschaulichung ein optionaler Mittelbalken 2m der Anzeigeeinrichtung 2 abgebildet, welcher beide Halbkreise 9' trennt.

Es versteht sich, dass es sich bei den vorstehend erläuterten Ausführungsbeispielen lediglich um beispielhafte Ausgestaltungen des erfindungsgemäßen Systems handelt. Insofern beschränkt sich die Ausgestaltung der Erfindung nicht auf diese Ausführungsbeispiele.

**Bezugszeichenliste**

| | |
|---|---|
| 1 | Fahrzeugsitz |
| 2 | Anzeigeeinrichtung |
| 2m | Mittelbalken |
| 3, 4 | Abschnitt |
| 3a, 3b, 3c, 4a, 4b, 4c | Segment |
| 5 | Oberteil |
| 6 | Unterteil |
| 7 | Schwingungseinrichtung |
| 8 | Balken |
| 8a | Längsrichtung |
| 9 | Kreis |
| 9'r | Halbkreis |
| 9r, 9'r, Kr | Radialrichtung |
| 11, 12, 13, 14 | Signal |
| 15 | Verarbeitungseinheit |
| 16 | Speichereinheit |
| 17 | Trennlinie |
| 21, 22, 23, 24 | Daten |
| 31, 32, 33 | Aktor |
| 41, 42, 43 | Parameter |
| a1, a2, a1(t), a2(t), a(t) | Beschleunigung |
| a, b, c | Projektion |
| CU | Steuerungseinrichtung |
| K | virtuelle Kreisscheibe |
| K1 | Mittelachse |
| Q | Fläche |
| S | System |
| S1, S2 | Sensor |
| U | Untergrund |
| V | Fahrzeug |
| x1, ..., x6; y1, ..., y6 | Kenngröße |
| Z1, Z2, Z3 | Anteil |
| $\Delta t$ | Zeitintervall |
| $\varphi$ | Winkel |

**Patentansprüche**

1.  System (S) zur Darstellung von Schwingungen für ein Fahrzeug (V),
    umfassend einen Fahrzeugsitz (1) mit einem Oberteil (5) und einem Unterteil (6), welche mittels einer Schwingungseinrichtung (7) zueinander beweglich gelagert sind, wobei am Oberteil (5) mindestens ein erster Sensor (S1) angeordnet ist, welcher dazu ausgebildet ist, mindestens eine erste Kenngröße (x1, ..., x6) einer ersten Beschleunigung (a1) des Oberteils (5) gegenüber dem Unterteil (6) zu erfassen, und wobei am Unterteil (6) mindestens ein zweiter Sensor (S2) angeordnet ist, welcher dazu ausgebildet ist, mindestens eine zweite Kenngröße (y1, ..., y6) einer zweiten Beschleunigung (a2) des Unterteils (6) gegenüber einem Untergrund (U) des Fahrzeugs (V) zu erfassen,

**gekennzeichnet durch**

eine Anzeigeeinrichtung (2) mit einem ersten Abschnitt (3) und einem zweiten Abschnitt (4), welche jeweils eine vollständige Aufteilung in jeweils mindestens zwei, bevorzugt drei Segmente (3a, 3b, 3c; 4a, 4b, 4c) aufweisen, wobei die Größenverhältnisse der mindestens zwei Segmente (3a, 3b, 3c; 4a, 4b, 4c) zueinander in Abhängigkeit von einem aktuellen Wert der mindestens einen ersten Kenngröße (x1, ..., x6) oder der mindestens einen zweiten Kenngröße (y1, ..., y6) aktualisierbar sind.

2. System (S) nach Anspruch 1,
   **dadurch gekennzeichnet, dass**
   der mindestens eine erste Sensor (S1) dazu ausgebildet ist, erste Signale (11), welche auf der mindestens einen ersten Kenngröße (x1, ..., x6) basieren, an eine übergeordnete Steuerungseinrichtung (CU) zu senden, und dass der mindestens eine zweite Sensor (S2) dazu ausgebildet sind, zweite Signale (12), welche auf der mindestens einen zweiten Kenngröße (y1, ..., y6) basieren, an die Steuerungseinrichtung (CU) zu senden, wobei die Steuerungseinrichtung (CU) dazu ausgebildet ist, ausgehend von den ersten (11) und/ oder den zweiten Signalen (12) dritte (13) und vierte Signale (14) an die Anzeigeeinrichtung (2) zu senden.

3. System (S) nach einem der vorhergehenden Ansprüche,
   **dadurch gekennzeichnet, dass**
   die mindestens eine erste Kenngröße (x1, ..., x6) und die mindestens eine zweite Kenngröße (y1, ..., y6) ausgewählt sind aus einer Gruppe umfassend eine Amplitude (x1), eine Frequenz (x3), eine Periodendauer (x2), einen Istwert (x6), einen Mittelwert (x4) und einen Summanden (x5) über eine definierte Zeitspanne der ersten Beschleunigung (a1) oder der zweiten Beschleunigung (a2).

4. System (S) nach einem der vorhergehenden Ansprüche,
   **dadurch gekennzeichnet, dass**
   der erste Abschnitt (3) und/oder der zweite Abschnitt (4) jeweils in Form eines Balkens (8) ausgestaltet sind, welcher entlang einer Längserstreckung (8a) eine Unterteilung in die mindestens zwei Segmente (3a, 3b, 3c; 4a, 4b, 4c) aufweist.

5. System (S) nach einem Ansprüche 1-3,
   **dadurch gekennzeichnet, dass**
   der erste Abschnitt (3) und/oder der zweite Abschnitt (4) in Form eines Kreises (9) oder eines Halbkreises (9') ausgestaltet sind, welcher entlang einer Radialrichtung (9r, 9'r) eine Unterteilung in die mindestens zwei Segmente (3a, 3b, 3c; 4a, 4b, 4c) aufweist.

6. System (S) nach einem der vorhergehenden Ansprüche,
   **dadurch gekennzeichnet, dass**
   Parameter (41, 42, 43) von Aktoren (31, 32, 33) des Fahrzeugs (V) mittels der Steuerungseinrichtung (CU) einstellbar sind, wobei mittels der Steuerungseinrichtung (CU) die Parameter (41, 42, 43) der Aktoren (31, 32, 33) und/ oder Daten (21, 22, 23, 24), welche auf den ersten, zweiten, dritten und/ oder vierten Signalen (11, 12, 13, 14) basieren, an eine Verarbeitungseinheit (15) und an eine Speichereinheit (16) übertragbar sind.

7. System (S) nach einem der vorhergehenden Ansprüche,
   **dadurch gekennzeichnet, dass**
   eine Größe eines der Segmente (3a, 3b, 3c; 4a, 4b, 4c) des ersten (3) und/oder zweiten Abschnitts (4) der Anzeigeeinrichtung (2) linear zu einer Größe einer Projektion (a, b, c) eines dem jeweiligen Segment (3a, 3b, 3c; 4a, 4b, 4c) zugeordneten Anteils (S1, S2, S3) einer virtuellen Kreisscheibe (K) auf eine Fläche (Q) parallel zu einer Mittelachse (K1) der virtuellen Kreisscheibe (K) ausgestaltbar ist.

8. System (S) nach Anspruch 7,
   **dadurch gekennzeichnet, dass**
   eine Anzahl der Anteile (S1, S2, S3) der Kreisscheibe (K) einer Anzahl der Segmente (3a, 3b, 3c; 4a, 4b, 4c) des jeweiligen Abschnitts (3; 4) entspricht, wobei die Anteile (S1, S2, S3) bevorzugt jeweils gleich groß sind und die Kreisscheibe (K) bevorzugt vollständig in die Anteile (S1, S2, S3) aufgeteilt ist.

**EP 3 608 766 B1**

**Claims**

1. System (S) for representing vibrations for a vehicle (V), comprising a vehicle seat (1) with an upper part (5) and a lower part (6), which are mounted movably relative to each other by means of a vibration device (7), wherein at least one first sensor (S1), which is adapted to detect at least one first characteristic (x1, ..., x6) of a first acceleration (a1) of the upper part (5) relative to the lower part (6), is arranged on the upper part (5), and wherein at least one second sensor (S2), which is adapted to detect at least one second parameter (y1, ..., y6) of a second acceleration (a2) of the lower part (6) relative to a substrate (U) of the vehicle (V), is arranged on the lower part (6),
**characterized by**
a display device (2) having a first section (3) and a second section (4), each exhibiting a complete division into at least two, preferably three segments (3a, 3b, 3c; 4a, 4b, 4c), wherein the size ratios of the at least two segments (3a, 3b, 3c; 4a, 4b, 4c) to one another can be updated depending on a current value of the at least one first characteristic (x1, ..., x6) or the at least one second characteristic (y1, ..., y6).

2. System (S) according to claim 1,
**characterized in that**
the at least one first sensor (S1) is adapted to transmit first signals (11), which are based on the at least one first characteristic (x1, ..., x6), to a parent control device (CU),
and that the at least one second sensor (S2) is adapted to transmit second signals (12), which are based on the at least one second characteristic (y1, ..., y6) to the control device (CU),
wherein the control device (CU) is adapted to send third (13) and fourth signals (14) to the display device (2) based on the first (11) and/or the second signals (12).

3. System (S) according to any one of the preceding claims,
**characterized in that**
the at least one first characteristic (x1, ..., x6) and the at least one second characteristic (y1, ..., y6) are selected from a group comprising an amplitude (x1), a frequency (x3), a period duration (x2), an actual value (x6), an average value (x4) and a summand (x5) over a defined period of the first acceleration (a1) or the second acceleration (a2).

4. System (S) according to any one of the preceding claims,
**characterized in that**
the first section (3) and/or the second section (4) are each configured in the form of a bar (8), which, along a longitudinal extent (8a), exhibits a subdivision into the at least two segments (3a, 3b, 3c, 4a, 4b, 4c).

5. System (S) according to one of the claims 1-3,
**characterized in that**
the first section (3) and/or the second section (4) are designed in the form of a circle (9) or a semicircle (9'), which, along a radial direction (9r, 9'r), exhibits a subdivision into the at least two segments (3a, 3b, 3c; 4a, 4b, 4c).

6. System (S) according to any one of the preceding claims,
**characterized in that**
parameters (41, 42, 43) of actuators (31, 32, 33) of the vehicle (V) can be adjusted by means of the control device (CU), wherein by means of the control device (CU), the parameters (41, 42, 43) of the actuators (31, 32, 33) and/or data (21, 22, 23, 24) which are based on the first, second, third and/or fourth signals (11, 12, 13, 14), can be transferred to a processing unit (15) and to a memory unit (16).

7. System (S) according to any one of the preceding claims,
**characterized in that**
a size of one of the segments (3a, 3b, 3c; 4a, 4b, 4c) of the first (3) and/or second section (4) of the display device (2) can be formed linearly to a size of a projection (a, b, c) of a portion (S1, S2, S3) of a virtual circular disc (K) assigned to the respective segment (3a, 3b, 3c; 4a, 4b, 4c) onto an area (Q) parallel to a central axis (K1) of the virtual circular disc (K).

8. System (S) according to claim 7,
**characterized in that**
a number of the portions (S1, S2, S3) of the circular disc (K) corresponds to a number of segments (3a, 3b, 3c; 4a, 4b, 4c) of the respective section (3, 4), wherein the portions (S1, S2, S3) are preferably in each case the same size and the circular disc (K) is preferably completely divided into the portions (S1, S2, S3).

**Revendications**

1.  Système (S) pour la représentation de vibrations pour un véhicule (V), comportant un siège de véhicule (1) avec une partie supérieure (5) et une partie inférieure (6), lesquelles sont montées déplaçables l'une par rapport à l'autre au moyen d'un dispositif oscillant (7), dans lequel sur la partie supérieure (5) au moins un premier capteur (S1) est disposé, lequel est conçu pour détecter au moins une première grandeur caractéristique (x1, ..., x6) d'une première accélération (a1) de la partie supérieure (5) par rapport à la partie inférieure (6), et dans lequel sur la partie inférieure (6) au moins un second capteur (S2) est disposé, lequel est conçu pour détecter au moins une seconde grandeur caractéristique (y1, ..., y6) d'une seconde accélération (a2) de la partie inférieure (6) par rapport à un sol (U) du véhicule (V), **caractérisé par**
    un dispositif d'affichage (2) avec une première section (3) et une seconde section (4), lesquelles présentent chacune une division complète en à chaque fois au moins deux, de préférence trois segments (3a, 3b, 3c ; 4a, 4b, 4c), les rapports de dimension desdits au moins deux segments (3a, 3b, 3c ; 4a, 4b, 4c) l'un par rapport à l'autre étant actualisables en fonction d'une valeur courante de ladite au moins une première grandeur caractéristique (x1, ..., x6) ou de ladite au moins une seconde grandeur caractéristique (y1, ..., y6).

2.  Système (S) selon la revendication 1,
    **caractérisé par le fait que**
    ledit au moins un premier capteur (S1) est conçu pour envoyer des premiers signaux (11), lesquels sont basés sur ladite au moins une première grandeur caractéristique (x1, ..., x6), à un dispositif de commande de niveau supérieur (CU),
    et **par le fait que** ledit au moins un second capteur (S2) est conçu pour envoyer des deuxièmes signaux (12), lesquels sont basés sur ladite au moins une seconde grandeur caractéristique (y1, ..., y6), au dispositif de commande (CU),
    le dispositif de commande (CU) étant conçu pour envoyer des troisièmes signaux (13) et des quatrièmes signaux (14) au dispositif d'affichage (2) à partir des premiers signaux (11) et/ou des deuxièmes signaux (12).

3.  Système (S) selon l'une quelconque des revendications précédentes,
    **caractérisé par le fait que**
    ladite au moins une première grandeur caractéristique (x1, ..., x6) et ladite au moins une seconde grandeur caractéristique (y1, ..., y6) sont choisies dans un groupe comportant une amplitude (x1), une fréquence (x3), une durée de période (x2), une valeur réelle (x6), une valeur moyenne (x4) et un terme d'une somme (x5) sur une période définie de la première accélération (a1) ou de la seconde accélération (a2).

4.  Système (S) selon l'une quelconque des revendications précédentes,
    **caractérisé par le fait que**
    la première section (3) et/ou la seconde section (4) sont agencées chacune sous forme d'une barre (8), laquelle présente une subdivision en lesdits au moins deux segments (3a, 3b, 3c ; 4a, 4b, 4c) le long d'une étendue longitudinale (8a).

5.  Système (S) selon l'une quelconque des revendications 1 à 3,
    **caractérisé par le fait que**
    la première section (3) et/ou la seconde section (4) sont agencées sous forme d'un cercle (9) ou d'un demi-cercle (9'), lequel présente une subdivision en lesdits au moins deux segments (3a, 3b, 3c ; 4a, 4b, 4c) le long d'une direction radiale (9r, 9'r).

6.  Système (S) selon l'une quelconque des revendications précédentes,
    **caractérisé par le fait que**
    des paramètres (41, 42, 43) d'actionneurs (31, 32, 33) du véhicule (V) sont réglables au moyen du dispositif de commande (CU), les paramètres (41, 42, 43) des actionneurs (31, 32, 33) et/ou données (21, 22, 23, 24), qui reposent sur les premiers, deuxièmes, troisièmes et/ou quatrièmes signaux (11, 12, 13, 14), étant transférables à une unité de traitement (15) et à une unité de mémorisation (16) au moyen du dispositif de commande (CU).

7.  Système (S) selon l'une quelconque des revendications précédentes,
    **caractérisé par le fait qu'**
    une dimension de l'un des segments (3a, 3b, 3c ; 4a, 4b, 4c) de la première section (3) et/ou de la seconde section (4) du dispositif d'affichage (2) est apte à être agencée linéairement par rapport à une dimension d'une projection (a, b, c) d'une partie (S1, S2, S3) associée au segment respectif (3a, 3b, 3c ; 4a, 4b, 4c) d'un disque circulaire virtuel (K) sur une surface (Q) parallèle à un axe central (K1) du disque circulaire virtuel (K).

8. Système (S) selon la revendication 7,
**caractérisé par le fait qu'**
un nombre des parties (S1, S2, S3) du disque circulaire (K) correspond à un nombre des segments (3a, 3b, 3c ; 4a, 4b, 4c) de la section respective (3 ; 4), les parties (S1, S2, S3) étant de préférence à chaque fois de même dimension et le disque circulaire (K) étant de préférence complètement divisé en les parties (S1, S2, S3).

Fig. 1

Fig. 2

Fig. 3a

Fig. 3b

Fig. 3c

Fig. 3d

Fig. 4a

Fig. 4b

Fig. 4c

Fig. 5a

$X_3 = \frac{1}{X_2}$

Fig. 5b

**IN DER BESCHREIBUNG AUFGEFÜHRTE DOKUMENTE**

**In der Beschreibung aufgeführte Patentdokumente**

- EP 1661796 A